(19) Europäisches Patentamt
European Patent Office
Office européen des brevets

(11) **EP 4 675 348 A1**

(12) **EUROPEAN PATENT APPLICATION**
published in accordance with Art. 153(4) EPC

(43) Date of publication:
07.01.2026 Bulletin 2026/02

(51) International Patent Classification (IPC):
*G03B 17/56* (2021.01)    *G03B 15/00* (2021.01)
*H04N 5/222* (2006.01)    *H04N 7/18* (2006.01)

(21) Application number: 24763638.4

(22) Date of filing: 15.02.2024

(52) Cooperative Patent Classification (CPC):
G03B 15/00; G03B 17/56; H04N 5/222; H04N 7/18

(86) International application number:
PCT/JP2024/005322

(87) International publication number:
WO 2024/181155 (06.09.2024 Gazette 2024/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.02.2023 JP 2023028535

(71) Applicant: Panasonic Intellectual Property
Management Co., Ltd.
Kadoma-shi, Osaka 571-0057 (JP)

(72) Inventors:
• YOSHIDA, Katsuhiko
Kadoma-shi, Osaka 571-0057 (JP)
• HAYASHI, Daisuke
kadoma-shi, Osaka 571-0057 (JP)
• SAWATA, Masashi
kadoma-shi, Osaka 571-0057 (JP)
• YOSHINO, Kazuki
kadoma-shi, Osaka 571-0057 (JP)

(74) Representative: Novagraaf International SA
Chemin de l'Echo 3
1213 Onex, Geneva (CH)

(54) **IMAGING DEVICE**

(57) When an imaging device having a pan-tilt head is installed on the outside, it has been difficult to install the imaging device while keeping the pan-tilt head horizontal. The imaging device (100) includes an imaging unit (10) that has a lens and an image sensor (12), and a pan-tilt head (20) that rotatably supports the imaging unit (10). The pan-tilt head (20) has a base unit (21) that is fixed to outside of the imaging device (100), and a leveling instrument (30) that measures tilt of the base unit (21) with respect to a horizontal plane.

FIG. 2

**Description**

TECHNICAL FIELD

The present disclosure relates to an imaging device.

BACKGROUND ART

In a camera, and particularly a video camera capable of capturing video, image misalignment from the horizontal direction is an issue. Japanese Laid-Open Patent Application 2014-68335 discloses that tilt of an image is corrected by utilizing an acceleration sensor, particularly for the purpose of image stabilization.

DISCLOSURE OF THE INVENTION

[Problems to be Solved by the Invention]

In recent years, a type of a camera used by fixing a pan-tilt head that rotatably supports an imaging unit to a structure, a tripod, or a moving object, such as a PTZ (pan-tilt-zoom) camera, has been often used. In a camera used by fixing the pan-tilt head on outside, it is not necessarily easy to fix the pan-tilt head horizontally.

[Means for Solving Problems]

The imaging device in a first aspect of the present disclosure comprises an imaging unit having a lens and an image sensor, and a pan-tilt head that rotatably supports the imaging unit. The pan-tilt head has a base portion fixed to the outside of the imaging device, and a leveling instrument that measures tilt of the base portion with respect to a horizontal plane.

The imaging device in a second aspect of the present disclosure is the imaging device of the first aspect, and connected to an external computer via a network. The computer includes a display device. Tilt information about the pan-tilt head measured by the leveling instrument is outputted from the imaging device, transmitted to the computer over the network, and displayed on the display device.

[Effects of Invention]

Because the imaging device of the first aspect of the present disclosure comprises a leveling instrument that measures tilt of the pain-tilt head, when the imaging device is installed on the outside, the installer can ascertain the tilt of the pan-tilt head from the horizontal plane, which makes it easier to install the imaging device.

The imaging device of the second aspect of the present disclosure can display tilt information about the pan-tilt head on the display unit of a computer connected via a network. Therefore, a person in a remote location can ascertain the tilt information about the pan-tilt head.

Informing the installer of the imaging device of the tilt information about the pan-tilt head assists the installer in the installation of the pan-tilt head.

BRIEF DESCRIPTION OF DRAWINGS

Fig. 1 is an oblique view of the appearance of an imaging device 100 of a first embodiment.
Fig. 2 is a control block diagram of the imaging device 100 of the first embodiment.
Fig. 3A is a plan view of the imaging device 100 of the first embodiment as viewed from above, showing the direction in desktop mode.
Fig. 3B is a diagram of the imaging device 100 of the first embodiment as viewed from the front.
Fig. 3C is a plan view of the imaging device 100 of the first embodiment as viewed from below, showing the direction in hanging mode.
Fig. 4A is a schematic diagram illustrating the notation of the tilt of the pan-tilt head 20 in the left-right direction from the horizontal plane in desktop mode and hanging mode.
Fig. 4B is a schematic diagram illustrating the notation of the tilt of the pan-tilt head 20 in the front-back direction from the horizontal plane in desktop mode and hanging mode.
Fig. 5 is a display example of a display screen 51a of a display unit 51.

DESCRIPTION OF EMBODIMENTS

Embodiments will now be described through reference to the drawings in detail. However, some unnecessarily detailed description may be omitted. For example, detailed description of already known facts or redundant description of components that are substantially the same may be omitted. This is to avoid unnecessary repetition in the following description, and facilitate an understanding on the part of a person skilled in the art. The applicant has provided the appended drawings and the following description so that a person skilled in the art might fully understand this disclosure, but does not intend for these to limit what is discussed in the patent claims.

<First Embodiment>

1. Configuration of Imaging Device 100

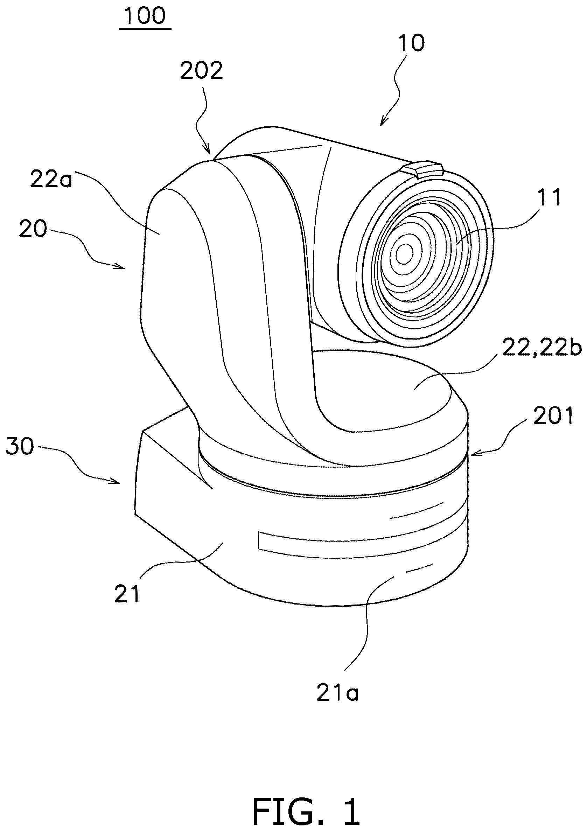

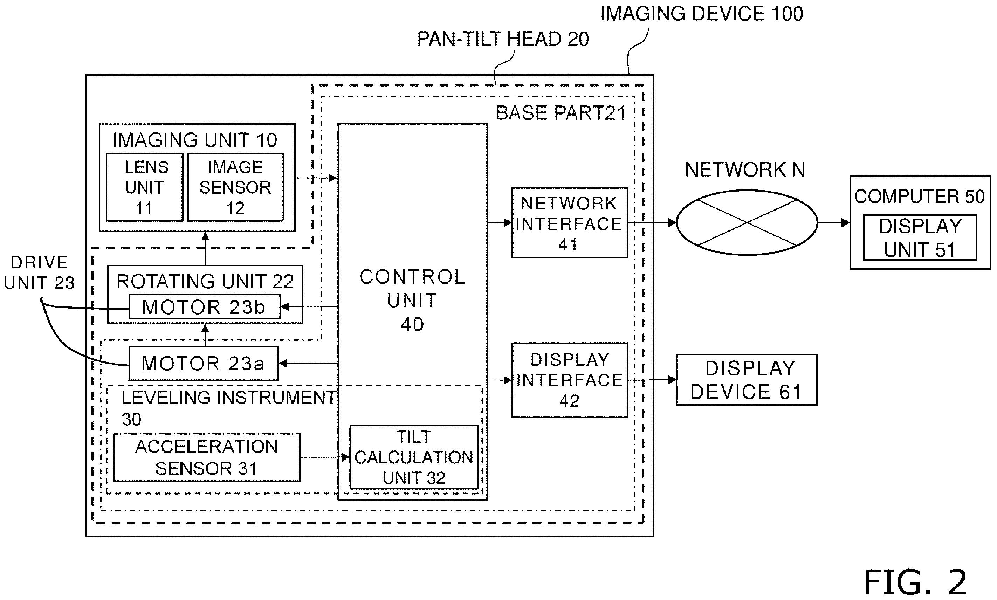

The imaging device 100 in this embodiment is a camera capable of acquiring and outputting video. The imaging device 100 is a camera capable of driving an imaging unit 10 and changing the imaging range. The imaging device 100 may be a PTZ camera having a PTZ (pan-tilt-zoom) functionality.
The appearance of the imaging device 100 of this embodiment is shown in Fig. 1, and a control block diagram is shown in Fig. 2. The imaging device 100 includes the imaging unit 10, a pan-tilt head 20, a drive unit 23, a control unit 40, a network interface 41, and a display interface 42. In Fig. 1, the imaging unit 10 is disposed above the pan-tilt head 20 in the vertical direction. Such arrangement is called desktop mode. Conversely, the imaging unit 10 may be disposed below the pan-tilt head 20 in the vertical direction. Such arrangement is called hanging mode.

As shown in Fig. 2, the imaging unit 10 includes an image sensor 12 and a lens unit 11. The image sensor 12 acquires video of the external space via the lens unit 11 and outputs this to the control unit 40. The image sensor 12 is a CMOS, a CCD, or the like. The lens unit 11 includes a plurality of lenses. The lens unit 11 moves the lenses based on a control signal transmitted from the control unit 40. The focal position and zoom position of the lenses can be adjusted under the control of the control unit 40. The zoom functionality (optical zoom) of the imaging device 100 is realized by moving the lenses.

The imaging unit 10 may further include a leveling instrument (not shown) in addition to the leveling instrument 30 installed on the pan-tilt head. The leveling instrument of the imaging unit 10 corrects the tilt of the video. The leveling instrument may include an acceleration sensor. The acceleration sensor may be a triaxial acceleration sensor.

The pan-tilt head 20 rotatably supports the imaging unit 10. The pan-tilt head 20 serves as a housing and internally houses the drive unit 23, the leveling instrument 30, the control unit 40, etc. An interface such as a network interface 41 or a display interface 42 is disposed on the surface of the pan-tilt head 20 to be accessible from outside.

As shown in Fig. 1, the pan-tilt head 20 has a base unit 21 and a rotating unit 22. The rotating unit 22 includes a connection portion 22b to the disk-shaped base unit 21, and an arm 22a that is a connection portion to the arm-shaped imaging unit 10. The base unit 21 is connected to the rotating unit 22 at a connection portion 201. The rotating unit 22 is driven by a drive unit 23 and can rotate within a horizontal plane. This unit may be capable of rotating 360° or more within the horizontal plane. When the rotating unit 22 rotates within the horizontal plane, the imaging unit 10 also rotates within the horizontal plane, and the imaging area captured by the imaging unit 10 also rotates within the horizontal plane.

The arm 22a of the rotating unit 22 of the pan-tilt head 20 is connected to the imaging unit 10 at a connection portion 202. The imaging unit 10 is driven by the drive unit 23 and can rotate within a vertical plane. The angle of rotation within the vertical plane may be less than 360° or may be equal to or greater than 360°. The imaging unit 10 rotates within the vertical plane, and the imaging area captured by the imaging unit 10 also rotates within the vertical plane.

The base unit 21 of the pan-tilt head 20 fixes the imaging device 100 to outside. A logo such as a product name is disposed on the front surface 21a of the base unit 21. The surface of the base unit 21 on the opposite side from the connection unit 201 is an installation surface 21b that is installed in contact with outside. "Outside" may be a ceiling, or a building or a moving object installed on a ceiling. The hanging mode is usually used in such a case. Outside may also be a building, a tripod, a moving object, or the like that is installed on the ground. In this case, the desktop mode is usually used. In any case, the installation surface 21b of the pan-tilt head 20 is set to be horizontal. For example, the imaging device 100 can also be installed on a sloped surface of a building. In such a case, a separate attachment is inserted between the sloped surface and the base unit 21 so that the installation surface 21b of the pan-tilt head 20 will be horizontal.

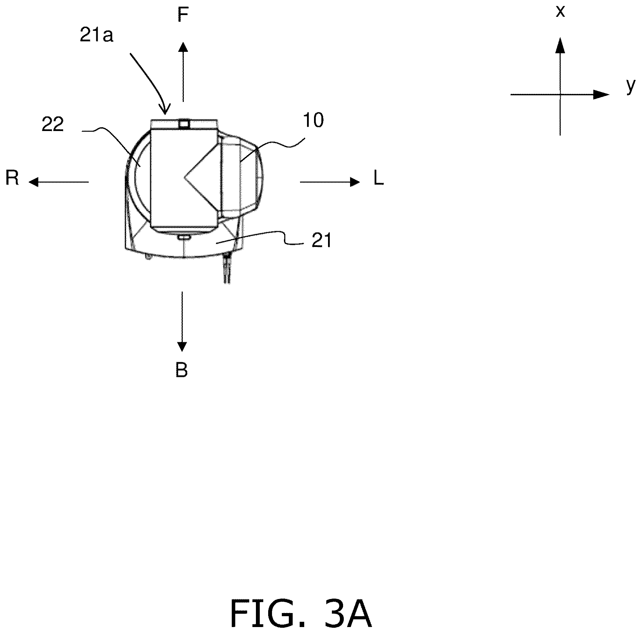

The leveling instrument 30 may include an acceleration sensor 31 and a tilt calculation unit 32. The acceleration sensor 31 is disposed in the pan-tilt head 20. The acceleration sensor 31 is fixed directly or indirectly to the base unit 21. That is, the acceleration sensor 31 will not move even if the rotating unit 22 rotates. The leveling instrument 30 measures how much the installation surface 21b of the pan-tilt head 20 is tilted with respect to a horizontal plane. More specifically, as shown in Fig. 3A, the leveling instrument 30 measures how much the x direction (front-back direction, shown as front F and back B in the drawing) or the y direction (left-right direction, shown as left L and right R in the drawing) of the pan-tilt head 20 is tilted in the vertical direction with respect to a horizontal plane. The measurement result from the acceleration sensor 31 is outputted to the tilt calculation unit 32. The tilt calculation unit 32 calculates the tilt in the x direction and the y direction from the measurement result of the acceleration sensor 31. The tilt calculation unit 32 may be a part of the control unit 40.

In this embodiment, the leveling instrument 30 includes the acceleration sensor 31. The acceleration sensor 31 may be a triaxial acceleration sensor. Also, there is no problem at all with using some other means besides an acceleration sensor, so long as it can measure tilt with respect to a horizontal plane.

The drive unit 23 drives the imaging unit 10 to rotate relative to the rotation unit 22 of the pan-tilt head 20. The drive unit 23 also drives the rotation unit 22 to rotate relative to the base unit 21. The drive unit 23 may include a motor 23a that drives the imaging unit 10, and a motor 23b that drives the rotation unit 22.

The imaging device 100 further includes various kinds of interface, such as a network interface 41 and a display interface 42. The imaging device 100 may further include an interface that outputs to a recording medium such as an SD card, or to a storage device, or a computer.

The network interface 41 can communicably connect the imaging device 100 to a network N. The imaging device 100 can communicate with a computer 50 connected to the network N. The computer 50 has a display unit 51. Video information captured by the imaging unit 10 can be transmitted over the network N to the computer 50 and displayed on the display unit 51. Similarly, tilt information about the pan-tilt head 20 measured by the leveling instrument 30 is transmitted from the imaging device 100 to the computer 50 via the network N and displayed on the display unit 51.

The display interface 42 can connect the imaging device 100 to an external display device 61. Video information captured by the imaging unit 10 can be displayed on the display device 61 via the display interface 42. Similarly, tilt information about the pan-tilt head 20 measured by the leveling instrument 30 is transmitted from the imaging device 100 via the display interface 42 and displayed on the display device 61.

The control unit 40 acquires imaging information from the imaging unit 10. The control unit 40 acquires tilt information about the pan-tilt head 20 from the leveling instrument 30. The control unit 40 transmits the imaging information and/or the tilt information about the pan-tilt head 20 from the network interface 41 to the computer 50 over a network. Similarly, the control unit 40 transmits the imaging information and/or the tilt information about the pan-tilt head 20 to the display device 61 via the display interface 42, where the information is displayed.

The control unit 40 may be constituted by a computer. This computer includes a CPU. A microprocessor may be used as the computer. The control unit 40 may be made up of a plurality of microprocessors. For example, the control unit 40 may be configured to include a computer that processes video signals, a microprocessor that controls the drive unit 23 of the pan-tilt head 20, a microprocessor that controls the lens unit 11, and a microprocessor that constitutes the tilt calculation unit 32. Also, the control unit 40 may be a combination of a computer and an electrical circuit. The control unit 40 may be constituted entirely by an electrical circuit.

2. Notation of the Tilt of the Pan-tilt Head 20 from the Horizontal Using the Leveling Instrument 30.

The notation of the tilt of the pan-tilt head 20 from the horizontal plane as measured by the leveling instrument 30 will now be described.

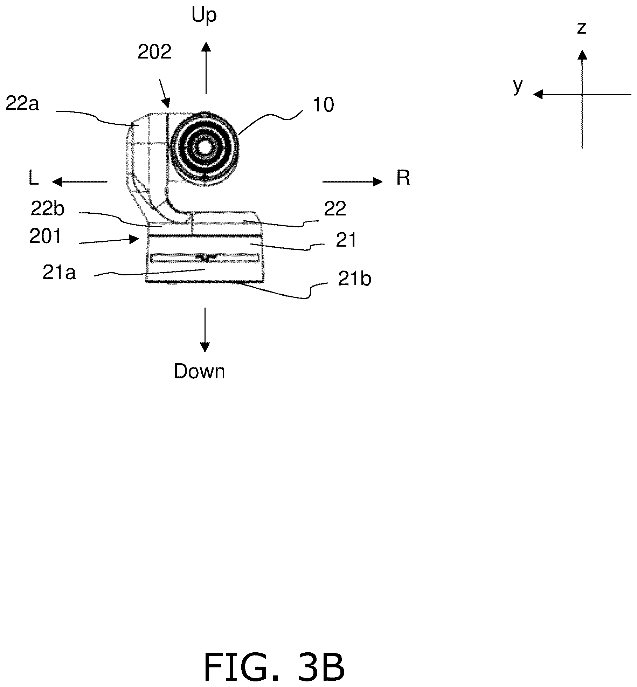

Fig. 3A is a diagram of the imaging device 100 as viewed from above in the vertical direction (from the imaging unit 10 side). Here, the imaging unit 10 and the rotating unit 22 of the pan-tilt head 20 rotate and change position, so the direction is defined by the orientation of the base unit 21. In Fig. 3A, the front surface 21a of the base unit 21 is termed the front, the opposite side is termed the back, and the direction from the back to the front is the x direction. As shown in Fig. 3A, left (L) and right (R) are defined in the horizontal plane, and the direction from left to right is the y direction. As shown in Fig. 3B, the direction from bottom to top is the z direction. How far the installation surface 21b of the pan-tilt head 20 is above or below the horizontal plane in the vertical direction (z direction) in the front-back direction (x direction) is indicated as an angle (full angle of 360°). For example, a tilt in which the front is 0.8° lower than the back is expressed as follows.

$$F\downarrow -0.8/+0.8 \uparrow B \ldots (1)$$

However, for the sake of convenience, if the tilt exceeds 9.9°, it is expressed as the maximum of 9.9°. Similarly, how far the installation surface 21b of the pan-tilt head 20 is above or below the horizontal plane in the vertical direction (z direction) in the left-right direction (y direction) is expressed as an angle (full angle of 360°). For example, a tilt in which the left is 3.2° higher than the right is expressed as follows.

$$L\uparrow +3.2/-3.2 \downarrow R \ldots (2)$$

However, for the sake of convenience, if the tilt exceeds 9.9°, it is expressed as the maximum of 9.9°.

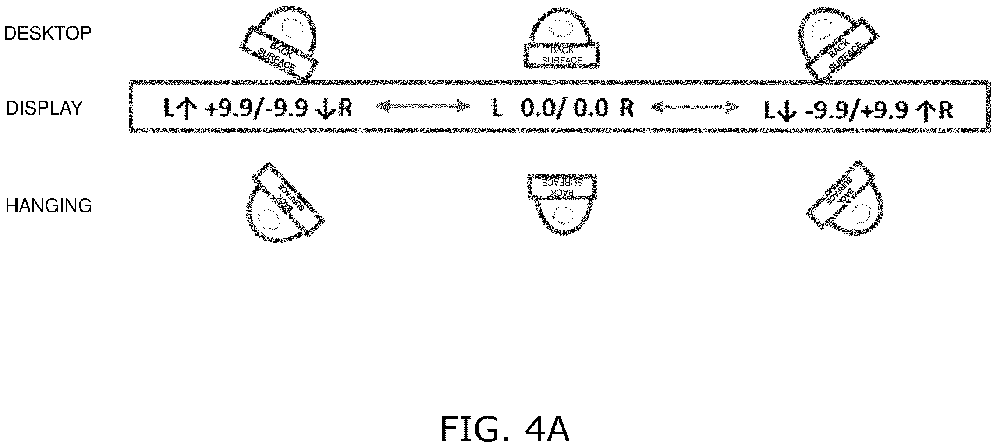

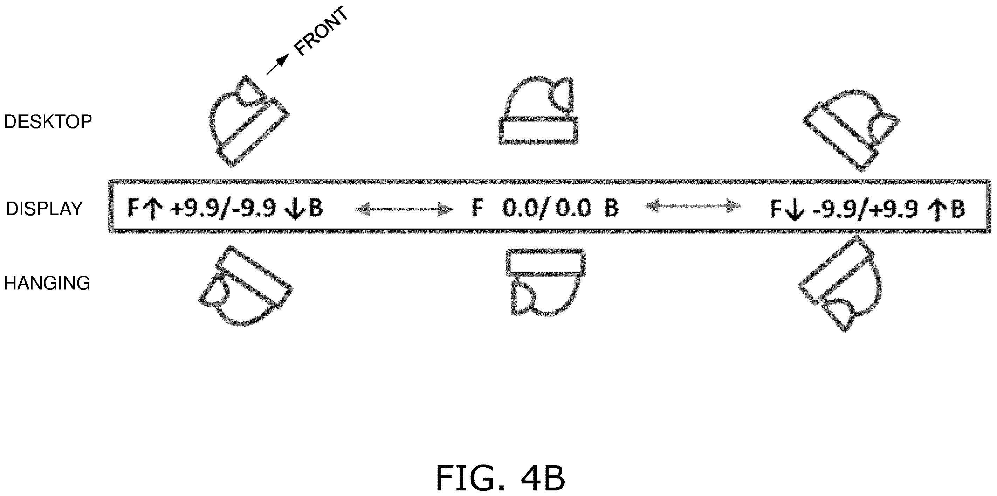

The value for this tilt will vary depending on whether the device is in desktop mode or hanging mode. This will be explained below with reference to Figs. 4A and 4B.

Fig. 4A is a diagram that schematically illustrates the difference between the desktop mode (denoted as DESKTOP) and the hanging mode (denoted as HANGING) for tilt in the left-right direction (y direction). As can be seen from Fig. 4A, for the left-right direction, a tilt in which the left (L) is above the horizontal plane is expressed as + in both modes, so the notation of tilt does not change.

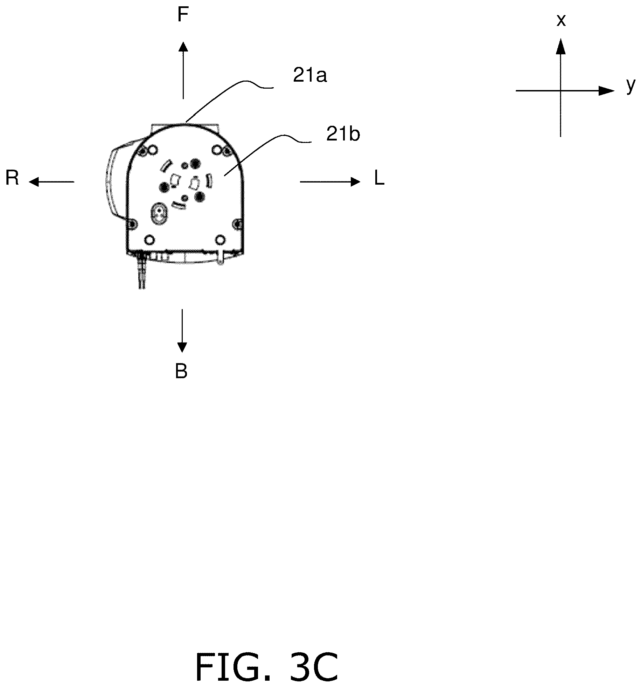

Fig. 4B is a diagram that schematically illustrates the difference between desktop mode and hanging mode for tilt in the front-back direction (x direction). As can be seen from Fig. 4B, the direction of tilt of the pan-tilt head 20 and the notation of + direction vary between desktop mode and hanging mode for the front-back direction. This occurs because the left-right direction (y direction) is defined inversely in Fig. 3A (desktop mode) and Fig. 3C (hanging mode). However, in actual installation, it is easy to understand intuitively that the definition of the direction changes in this way between desktop mode and hanging mode.

3. Installation Assistance Function for Imaging Device 100 using Leveling Instrument 30

Next, the setting assistance function of the imaging device 100 using the leveling instrument 30 in the pan-tilt head 20 will be described.

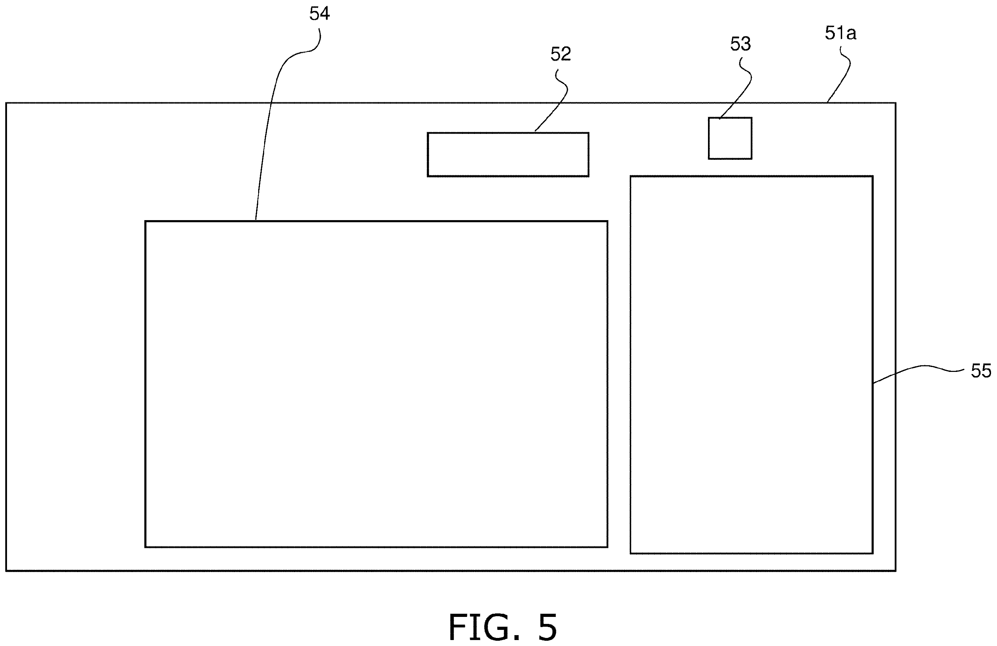

The tilt information about the pan-tilt head 20 measured by the leveling instrument 30 is outputted from the imaging device 100 to the user's computer 50 over the network N. The computer 50 displays the tilt information about the pan-tilt head 20 on the display unit 51. An example of the screen display on the display unit 51 is shown in Fig. 5.

A video display unit 54, a setting unit 55, an tilt display unit 52, and an tilt display on/off switch icon 53 are disposed on the screen 51a in Fig. 5. The video display unit 54 displays video (imaging information) captured by the imaging unit 10. The setting unit 55 displays various kinds of information, operation buttons, and so forth that are needed in the setting of the imaging device 100.

The tilt display unit 52 displays tilt information about the pan-tilt head 20 as measured by the leveling instrument 30. The tilt information about the pan-tilt head 20 includes the tilt of the pan-tilt head 20 in the front-back direction and the tilt of the pan-tilt head 20 in the left-right direction. The tilt of the pan-tilt head 20 in the front-back direction is, for example, "F↓ -0.8/+0.8 ↑B," and the tilt of the pan-tilt head 20 in the left-to-right direction is, for example, "L↑ +3.2/-3.2 ↓R."

The tilt display on/off switch icon 53 is a button that allows the user to switch the display of tilt information (tilt display unit 52) on and off. Clicking the tilt display on/off switch icon 53 while tilt information is being displayed turns off the display, and clicking the icon 53 when tilt information is not being displayed turns on the display of tilt information on the tilt display unit 52.

On the display screen 51a, it is possible to display tilt together with video, and it is also possible to display just the tilt.

The tilt information about the pan-tilt head 20 as measured by the leveling instrument 30 can also be outputted from the imaging device 100 to the display device 61 for display. The screen display of the display device 61 can be configured the same as in the display example of the display unit 51 (Fig. 5).

As another example of the screen display of the display unit 51 and the display device 61, the display of the tilt information may be configured to be superimposed on the video signal from the imaging unit 10. Also, configuring the display of the tilt information to be switched on and off by the display unit 51 or the display device 61, respectively, improves user convenience.

When the person installing the imaging device is about to install the imaging device 100, an assistant in a remote location can ascertain the tilt of the pan-tilt head 20 from the display on the display unit 51 of the computer 50. This assistant can thus inform the installer of the tilt of the pan-tilt head 20 and help the installer. The network interface 41 can be configured to be equipped with either a wired or wireless system, or both. The benefit of a wireless configuration is that the bother of wiring is eliminated, work efficiency is improved, etc.

The tilt information about the pan-tilt head 20 measured by the leveling instrument 30 can be outputted from the imaging device 100 to the display device 61 for display. The screen display of the display device 61 can be configured in exactly the same way as in the display example of the display unit 51 (Fig. 5).

In this case, the person installing the imaging device 100 outside can do the job by himself, or someone nearby can assist in the installation work.

4. Features of this Embodiment

The imaging device 100 of this embodiment comprises the imaging unit 10 and the pan-tilt head 20. The imaging unit 10 has the lens unit 11 and the image sensor 12. The pan-tilt head 20 includes the base unit 21, the rotating unit 22, and the leveling instrument 30. The installation surface 21b of the base unit 21 is fixed to outside of the imaging device 100. "Outside" is a ceiling, a tripod, or a moving body, for example. The base unit 21 rotatably supports the rotating unit 22. The rotating unit 22 rotatably supports the imaging unit 10. The leveling instrument 30 is fixed to the base unit 21 either directly or indirectly. In other words, the leveling instrument 30 is disposed so that its positional relation with respect to the base unit 21 does not change even if the rotating unit 22 rotates relative to the base unit 21. The leveling instrument 30 measures the tilt of the base unit 21 of the pan-tilt head 20 with respect to a horizontal plane.

Since the imaging device 100 of the present disclosure is equipped with the leveling instrument 30 that measures the tilt of the pan-tilt head 20, when installing the imaging device 100 outside, the installer can ascertain the tilt of the pan-tilt head 20 from the horizontal plane, which facilitates the installation of the imaging device 100.

The leveling instrument 30 may be constituted by the acceleration sensor 31 and the tilt calculation unit 32 that calculates the tilt from information provided by the acceleration sensor 31. The acceleration sensor 31 measures the tilt of the base unit 21 of the pan-tilt head 20 from a horizontal plane in two directions, namely, the left-right direction (y direction) and the front-back direction (x direction).

The rotating unit 22 of the pan-tilt head 20 can rotate in the horizontal direction relative to the base unit 21. The rotating unit 22 of the pan-tilt head 20 also supports the imaging unit 10 rotatably in the vertical direction. The imaging device 100 is a PTZ camera having a PTZ functionality. The pan and tilt functions are realized by the rotation of the rotating unit 22 relative to the base unit 21 and the rotation of the imaging unit 10 relative to the pan-tilt head 20. The zoom function (optical zoom) is realized by the movement of the lenses in the lens unit 11.

The imaging device 100 has a plurality of interfaces for connecting to external devices, storage media, etc. These interfaces may include the network interface 41 and the display interface 42.

The display interface 42 of the imaging device 100 is connected to the display device 61. The image information acquired by the imaging unit 10 and the tilt information about the pan-tilt head measured by the leveling instrument 30 are transmitted to the display device 61 via the display interface 42. The display device 61 can display video information and tilt information.

The network interface 41 of the imaging device 100 is connected to the external computer 50 via the network N. The image information acquired by the imaging unit 10 and the tilt information about the pan-tilt head measured by the leveling instrument 30 are transmitted to the computer 50 via the network N. The computer 50 can display the image information and the tilt information on the display unit 51.

The imaging device 100 of this embodiment can display the tilt information about the pan-tilt head on the display unit 51 of the computer 50 connected via a network. This means that a person in a remote location can ascertain tilt information about the pan-tilt head. That tilt information about the pan-tilt head can then be informed to the person installing the imaging device 100, which facilitates the installation of the pan-tilt head.

The tilt information about the pan-tilt head includes the tilt of the base unit 21 of the pan-tilt head 20 in the left-right direction from the horizontal plane and the tilt in the front-back direction from the horizontal plane. The display of the left-right tilt and the front-back tilt in the tilt information includes a sign indicating positive or negative, and a number. Also, depending on how the imaging device 100 is attached to the outside, it is set to either desktop mode (in which the imaging unit 10 is above the pan-tilt head 20 in the vertical direction) or hanging mode (in which the imaging unit 10 is below the pan-tilt head 20 in the vertical direction). In desktop mode and hanging mode, tilt in the left-right direction from the horizontal plane and tilt in the front-back direction from the horizontal plane are defined, respectively. The notation may be different between desktop mode and hanging mode.

An embodiment of the present invention was described above, but the present invention is not limited to or by the above embodiment, and various modifications are possible without departing from the gist of the invention.

INDUSTRIAL APPLICABILITY

The imaging device of the present disclosure can be used by broadcasting stations or video producers to capture video in theaters, stadiums, or outdoors, or as a surveillance camera, etc.

Reference numerals

10 imaging unit
11 lens unit
12 image sensor
20 pan-tilt head
21 base part
21a front surface (of base part)
21b installation surface (of base part)
22 rotating unit
22a arm (of rotating unit)
22b connection part (with base part of rotating unit)
23 drive unit

30 leveling instrument
31 acceleration sensor
32 tilt calculation unit
40 control unit
41 network interface
42 display interface
50 computer
51 display unit
61 display device
100 imaging device
201 connection part of (rotating unit and base part)
202 connection part (of imaging unit and pan-tilt head)

**Claims**

1. An imaging device comprising:

   an imaging unit having a lens and an image sensor; and
   a pan-tilt head rotatably supporting the imaging unit,
   wherein the pan-tilt head has a base portion fixed to the outside of the imaging device, and a leveling instrument measuring tilt of the base portion with respect to a horizontal plane.

2. The imaging device according to claim 1, wherein the leveling instrument is constituted by an acceleration sensor and an tilt calculation unit configured to calculate the tilt from information obtained by the acceleration sensor.

3. The imaging device according to claim 2, wherein the leveling instrument measures the tilt from a horizontal plane in two directions that are the left-right direction and the front-back direction of the base part of the pan-tilt head.

4. The imaging device according to claim 3,

   wherein the pan-tilt head further has a rotating unit connected to the imaging unit and disposed so as to rotate with respect to the base unit, and the rotating portion is rotatable in the horizontal direction relative to the base portion.

5. The imaging device according to claim 1, wherein the imaging unit is supported by the pan-tilt head so as to be rotatable in the vertical direction relative to the base unit.

6. The imaging device according to claim 4, wherein the imaging unit is supported by the rotating unit so as to be rotatable in the vertical direction relative to the base unit.

**7.** The imaging device according to claim 1,

wherein the imaging device is connected to a computer via a network, and the computer includes a display device, and
tilt information about the pan-tilt head measured by the leveling instrument is outputted from the imaging device, transmitted to the computer over the network, and displayed on the display device.

**8.** The imaging device according to claim 7, wherein the tilt information includes the left-right tilt of the base portion of the pan-tilt head from the horizontal plane and the front-back tilt from the horizontal plane.

**9.** The imaging device according to claim 8,

wherein display of the left-right tilt and display of the front-back tilt in the tilt information include a number and a sign indicating positive or negative, and
the display is changed depending on whether the imaging unit is above the pan-tilt head or below the pan-tilt head in the vertical direction.

**10.** The imaging device according to claim 7, wherein display of the tilt on the display device is displayed together with a button configured to switch between displaying and not displaying the tilt.

FIG. 1

IMAGING DEVICE 100

PAN-TILT HEAD 20

BASE PART 21

IMAGING UNIT 10
LENS UNIT 11
IMAGE SENSOR 12

DRIVE UNIT 23

ROTATING UNIT 22
MOTOR 23b

MOTOR 23a

LEVELING INSTRUMENT 30
ACCELERATION SENSOR 31

CONTROL UNIT 40

TILT CALCULATION UNIT 32

NETWORK INTERFACE 41

DISPLAY INTERFACE 42

NETWORK N

COMPUTER 50
DISPLAY UNIT 51

DISPLAY DEVICE 61

FIG. 2

21a

F

22

10

R ← → L

21

B

x

y

FIG. 3A

FIG. 3B

FIG. 3C

DESKTOP

DISPLAY  L↑ +9.9/-9.9 ↓R  ⟷  L 0.0/ 0.0 R  ⟷  L↓ -9.9/+9.9 ↑R

HANGING

FIG. 4A

EP 4 675 348 A1

FIG. 4B

FIG. 5

## INTERNATIONAL SEARCH REPORT

| | International application No. |
|---|---|
| | **PCT/JP2024/005322** |

| **A.** | **CLASSIFICATION OF SUBJECT MATTER** |
|---|---|

*G03B 17/56*(2021.01)i; *G03B 15/00*(2021.01)i; *H04N 5/222*(2006.01)i; *H04N 7/18*(2006.01)i
FI:    G03B17/56 B; G03B15/00 S; H04N5/222 100; H04N7/18 E

According to International Patent Classification (IPC) or to both national classification and IPC

| **B.** | **FIELDS SEARCHED** |
|---|---|

Minimum documentation searched (classification system followed by classification symbols)

G03B17/56; G03B15/00; H04N5/222; H04N7/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2007-243686 A (HITACHI KOKUSAI ELECTRIC INC.) 20 September 2007 (2007-09-20) paragraphs [0011]-[0016], fig. 1-4 | 1 |
| Y | | 2-8, 10 |
| A | | 9 |
| Y | JP 2006-311196 A (SONY CORPORATION) 09 November 2006 (2006-11-09) paragraphs [0018], [0019], [0037]-[0039], fig. 5, 6 | 2-8, 10 |
| A | | 9 |
| Y | JP 2017-102138 A (PRODRONE CO., LTD.) 08 June 2017 (2017-06-08) paragraphs [0022]-[0030], fig. 2 | 2-8, 10 |
| A | | 9 |
| Y | JP 2009-94987 A (RICOH CO., LTD.) 30 April 2009 (2009-04-30) paragraphs [0040]-[0061], fig. 3-14 | 10 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| | International application No. |
|---|---|
| | **PCT/JP2024/005322** |

**C.    DOCUMENTS CONSIDERED TO BE RELEVANT**

| Category* | Citation of document, with indication, where appropriate, of the relevant passages | Relevant to claim No. |
|---|---|---|
| A | JP 2009-246937 A (RICOH CO., LTD.) 22 October 2009 (2009-10-22) paragraphs [0018], [0023], fig. 2, 8, 9 | 1-10 |

Form PCT/ISA/210 (second sheet) (July 2022)

## INTERNATIONAL SEARCH REPORT
### Information on patent family members

International application No.

**PCT/JP2024/005322**

| Patent document cited in search report | | | Publication date (day/month/year) | Patent family member(s) | Publication date (day/month/year) |
|---|---|---|---|---|---|
| JP | 2007-243686 | A | 20 September 2007 | (Family: none) | |
| JP | 2006-311196 | A | 09 November 2006 | (Family: none) | |
| JP | 2017-102138 | A | 08 June 2017 | (Family: none) | |
| JP | 2009-94987 | A | 30 April 2009 | US 2009/0096910 A1 paragraphs [0066]-[0114], fig. 3-14 | |
| JP | 2009-246937 | A | 22 October 2009 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014068335 A